# EUROPÄISCHE PATENTSCHRIFT

(11) **EP 1 138 272 B1**
(45) Veröffentlichungstag und Bekanntmachung des Hinweises auf die Patenterteilung: **01.09.2004**
(21) Anmeldenummer: 00106849.3
(22) Anmeldetag: 30.03.2000
(51) Int. Cl.: A61C 13/087, A61C 13/00

(54) **Verfahren zur Herstellung von Zahnersatz**
Method for manufacturing a dental prosthesis
Procédé de fabrication d'une prothèse dentaire

(43) Veröffentlichungstag der Anmeldung: 04.10.2001
(60) Teilanmeldung: 04003458.9
(73) Patentinhaber: Purner, Helmut, 5020 Salzburg (AT)
(72) Erfinder: Purner, Helmut, 5020 Salzburg (AT)
(74) Vertreter: Haft, von Puttkamer, Berngruber, Czybulka

(56) Entgegenhaltungen:
- EP-A- 0 486 705
- EP-A- 0 872 218
- EP-A- 0 917 860

## Beschreibung

Die Erfindung bezieht sich auf ein Verfahren zur Herstellung von Zahnersatz, der zumindest teilweise aus einem aromatischen Thermoplast besteht.

Ein solcher Zahnersatz ist bereits bekannt. So geht aus DE 44 20 044 A1 ein Zahnersatz hervor, der zur Befestigung an den natürlichen Zähnen drahtförmige Befestigungselemente aufweist, die aus einem aromatischen Thermoplast bestehen.

Nach EP-A-0 486 705 wird eine Vorform aus einem thermoplastischen Kunststoff, die auf einer Form angeordnet ist, durch Erwärmen erweicht und gegen eine Gegenform gepresst, um den Zahnersatz zu bilden.

Nach EP 0 917 860 A2 werden Teile des Zahnersatzes, wie Prothesesättel bei abnehmbarem Zahnersatz, oder bei festsitzendem Zahnersatz kappenförmige Teile, die auf die Restzähne geklebt oder zementiert werden, durch Spritzguß aus einem aromatischen Thermoplast hergestellt.

Mit diesem bekannten Zahnersatz werden zwar gegenüber dem bekannten Zahnersatz aus Metall wesentliche Vorteile erzielt, insbesondere Vermeidung von Allergien, keine das Aussehen beeinträchtigenden Reflexionen im sichtbaren Mundbereich und keine durch die hohe Wärmeleitfähigkeit von Metall bedingten unangenehmen Temperaturunterschiede im Mund. Bei dem bekannten Zahnersatz sind jedoch nur bestimmte Teile aus aromatischem Thermoplast hergestellt, nach der DE 44 20 044 A1 eben die drahtförmigen Befestigungselemente, und, da die Festigkeit spritzgegossener Teile zu wünschen übrig läßt, auch nach EP 0 917 860 A2 eher nur weniger belastete Teile.

Zudem weist das Verfahren nach EP 0 917 860 A2 den Nachteil auf, dass die poröse Masse in der das aus Wachs modellierte Zahnersatzteil angeordnet werden muss, beim Spritzgießen Sprünge bekommen kann.

Aufgabe der Erfindung ist es, ein einfacheres Verfahren zur Herstellung eines Zahnersatzes hoher Festigkeit aus Kunststoff zur Verfügung zu stellen.

Dies wird erfindungsgemäß mit dem im Anspruch 1 gekennzeichneten Verfahren erreicht. In den Unteransprüchen sind vorteilhafte Ausgestaltungen der Erfindung wiedergegeben.

Nach der Erfindung wird der Zahnersatz durch Pressen einer erwärmten Pressmasse aus einem aromatischen Thermoplast zwischen einer Form und einem Gegenstempel gebildet. Dadurch tritt überraschenderweise das eher spröde Verhalten spritzgegossener Zahnersatzteile aus aromatischem Thermoplast nicht auf. Möglicherweise hängt dies damit zusammen, daß die Angüsse an den spritzgegossenen Teilen zur Bildung von Schwachstellen führen.

Als aromatischer Thermoplast kann erfindungsgemäß beispielsweise Polyetheretherketon PEEK eingesetzt werden. Auch können sulfonsäuregruppenhaltige aromatische Thermoplasten eingesetzt werden, insbesondere Polyethersulfon (PES) oder Polysulfon (PSU) der allgemeinen Formel (̵R¹ - O - R² - SO₂)̵ₙ, worin R¹ und R² aromatische Reste sind.

Der aromatische Thermoplast kann zur Erhöhung der Festigkeit, insbesondere Druckfestigkeit, Füllstoffe enthalten. Auch kann durch den Füllstoff die Farbe der natürlichen Zähne zumindest angenähert werden.

Da durch den Füllstoff im allgemeinen die Elastizität herabgesetzt wird, werden Teile, die eher elastisch sein sollen, wie die Gaumenplatte, aus ungefülltem oder nur wenig Füllstoff enthaltendem aromatischen Thermoplast hergestellt.

Als Füllstoffe können Titandioxid, Kaolin, Talk, Kreide, gemahlene Glasfasern oder Mikroglaskügelchen eingesetzt werden. Der Gehalt der Füllstoffe beträgt dabei vorzugsweise nicht mehr als 60 Vol.-%, insbesondere höchstens 40 Vol.-%. Die gemahlenen Glasfasern können eine Länge von 0,3 bis 1,5 mm besitzen. Vorzugsweise sind sie jedoch weniger als 1 mm lang. Die Korngröße der übrigen, nicht faserförmigen Füllstoffe beträgt hingegen höchstens 100 µm. So werden die Mikroglaskügelchen vorzugsweise mit einer Teilchengröße von 5 bis 80 µm eingesetzt, Kaolin beispielsweise mit einer Teilchengröße von 0,3 bis 3 µm. Die obere Grenze des Füllstoffgehalts liegt dort, wo das Fließverhalten der Pressmasse beeinträchtigt wird. Um eine weiße Farbe zu erhalten, kann insbesondere Titandioxid als Füllstoff eingesetzt werden.

Nach dem erfindungsgemäßen Verfahren kann sowohl abnehmbarer Zahnersatz wie festsitzender Zahnersatz oder kombinierter abnehmbarer und festsitzender Zahnersatz hergestellt werden. Dabei kann der gesamte Zahnersatz nach dem erfindungsgemäßen Verfahren aus einem aromatischen Thermoplast, also eine Vollprothese hergestellt werden, oder nur Teile davon, insbesondere alle Teile, die bisher aus Metall hergestellt werden.

So kann bei abnehmbarem Zahnersatz erfindungsgemäß beispielssweise der Prothesesattel oder Prothesenbasis aus aromatischem Thermoplast hergestellt sein, der mit Retentionen zur Befestigung der Prothesezähne versehen ist.

Wenn der abnehmbare Zahnersatz mehrere Prothesesättel aufweist, können diese einstückig durch einen Bügel und/oder eine Gaumenplatte miteinander verbunden sein. Die Prothesesättel und der Bügel bzw. die Gaumenplatte können also aus einem einzigen Pressteil aus dem aromatischen Thermoplast bestehen.

Der festsitzende Zahnersatz kann beispielsweise eine Krone oder Brücke sein, die erfindungsgemäß ganz aus dem aromatischen Thermoplast bestehen können, zumindest jedoch deren Gerüst. Desgleichen kann ein Inlay erfindungsgemäß aus einem aromatischen Thermoplast hergestellt werden, zumindest jedoch dessen noch zu verblendende Unterlage.

Der Begriff Zahnersatz ist erfindungsgemäß weit auszulegen. So erfasst er z.B. auch in den Kieferknochen eingesetzte Implantate, an denen weiterer Zahnersatz befestigt wird.

Die Vertiefung in der Form und die gegenüberliegende Vertiefung in dem Gegenstempel oder, bei mehreren Vertiefungen in der Form und dem Gegenstempel, jede Vertiefung in der Form und jede gegenüberliegende Vertiefung in dem Gegenstempel bilden dabei einen Hohlraum, der dem herzustellenden Zahnersatz oder Zahnersatzteil entspricht.

Um eine solche Form bzw. einen solchen Gegenstempel herzustellen, wird zunächst aus einem Abdruck ein Modell hergestellt. An dem Modell wird mit einem modellierbaren, rückstandslos verbrennbaren Material, beispielsweise Wachs, der herzustellende Zahnersatz bzw. das herzustellende Zahnersatzteil modelliert. Der modellierte Zahnersatz oder das modellierte Zahnersatzteil wird dann mit einem Abschnitt in eine aushärtbare hitzebeständige Masse in der Form und mit seinem anderen Abschnitt in eine aushärtbare hitzebeständige Masse in dem Gegenstempel eingebettet. Anschließend wird die Masse in den beiden Formen bei einer ersten Temperatur, beispielsweise Raumtemperatur, ausgehärtet. Nach dem Aushärten der hitzebeständigen Masse wird auf eine zweite höhere Temperatur erwärmt, bei der der z.B. aus Wachs oder dergleichen brennbaren Material modellierte Zahnersatz bzw. das modellierte Zahnersatzteil verbrennt. Die Vertiefungen in der Form und dem Gegenstempel nach dem Verbrennen des modellierten Zahnersatzes bzw. modellierten Zahnersatzteiles bilden dann zusammen einen dem herzustellenden Zahnersatz bzw. Zahnersatzteil entsprechenden Hohlraum zum Pressen des Zahnersatzes mit einer Pressmasse aus einem aromatischen Thermoplast.

Die aushärtbare hitzebeständige Masse wird durch eine pastöse, plastische Masse gebildet, z.B. wie sie im zahntechnischen Bereich bekannt ist, beispielsweise eine Silicat-, Graphit- oder Gips-Masse, die bei Raumtemperatur aushärtet. Das Verbrennen der modellierten Wachsform kann in einem Ofen durchgeführt werden, beispielsweise bei 400 bis 600°C.

Die Pressmasse aus aromatischem Thermoplast kann durch ein Pulver, Granulat oder Schnitzel gebildet werden. Vorzugsweise wird jedoch ein Halbzeug, beispielsweise eine Platte oder ein kleiner Block aus aromatischem Thermoplast verwendet.

Zum Pressen wird die Pressmasse erwärmt, vorzugsweise auf 300 bis 500°C, insbesondere 350 bis 400°C. Der Pressdruck beträgt vorzugsweise 5 bis 400 bar, insbesondere 25 bis 250 bar.

Ferner hat es sich als vorteilhaft erwiesen, daß Pressen unter leichtem Vakuum durchzuführen, um Lufteinschlüsse im Zahnersatz zu verhindern.

Der aromatische Thermoplast kann aus ästhetischen Gründen auch eingefärbt werden, beispielsweise mit einem rosa Farbstoff. Desgleichen ist es möglich, eine entsprechend eingefärbte Kunststoffbeschichtung vorzusehen, beispielsweise rosa im Gaumenbereich der Prothese und weiß im Ersatzzahnbereich.

Nachstehend ist die Erfindung anhand der Zeichnung näher erläutert. Darin zeigen:

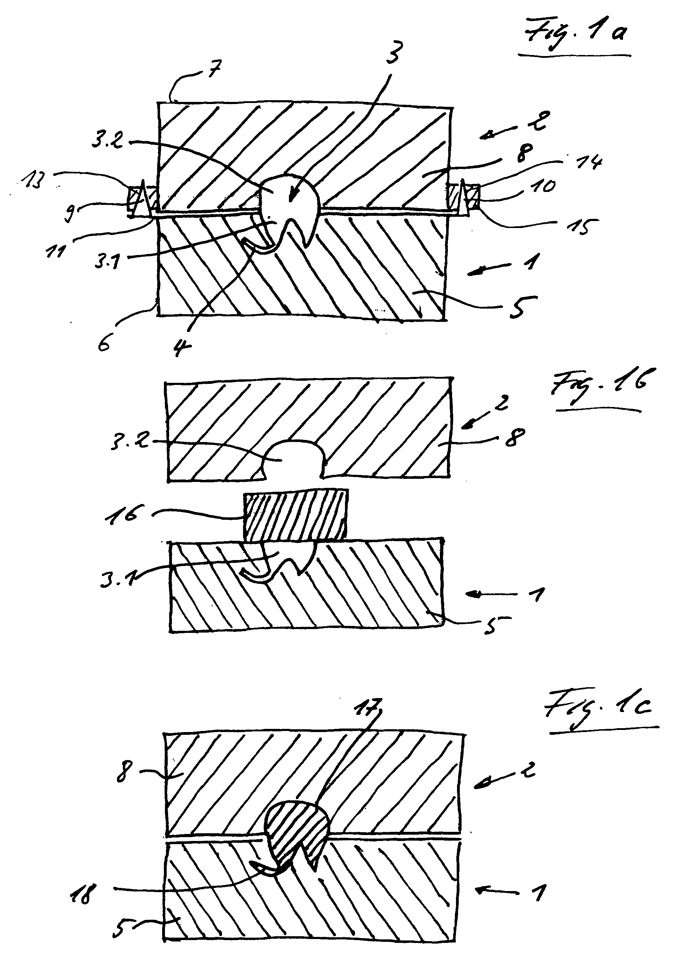

- Fig. 1a bis 1c: jeweils einen Schnitt durch eine Form und einen Gegenstempel zur Herstellung einer Krone, und zwar mit leeren Vertiefungen, sowie vor bzw. nach dem Pressen der Pressmasse nach einer ersten Ausführungsform des erfindungsgemäßen Verfahrens.

Danach wird zur Herstellung der Form 1 und des Gegenstempels 2 an einem Modell, das aus einem Abdruck hergestellt worden ist, mit einem rückstandslos verbrennbaren modellierbaren Material, beispielsweise Wachs, ein Zahnersatz, nämlich eine Krone modelliert, die eine dem Hohlraum 3 gemäß Fig. 1a entsprechende Form aufweist, also in ihrer Form der herzustellenden Krone 17 gemäß Fig. 1c entspricht. Dabei ist an dem unteren spitzen Endbereich der modellierten Wachskrone ein dünner Fortsatz angeformt, der dem Kanal 4 entspricht.

Die modellierte Wachskrone wird dann mit ihrem unteren Abschnitt, der der Vertiefung 3.1 in Fig. 1a entspricht, in eine pastöse Masse 5 gebettet, die in einen zum Gegenstempel 2 offenen Hohlkörper 6 gefüllt ist.

Der zur Form 1 hin offene Hohlkörper 7, der den Gegenstempel 2 bildet, wird gleichfalls mit plastischer Masse 8 gefüllt und gegen den oberen Abschnitt der Wachskrone gedrückt, der der Vertiefung 3.2 entspricht.

Die Position der beiden Hohlkörper 6 und 7 zueinander wird durch eine Positioniereinrichtung, beispielsweise in Form von konischen Zapfen 9, 10 an einem Flansch 11 an der Form 1, welche in konische Bohrungen 13, 14 an einem Flansch 15 des Gegenstempels 2 eingreifen, festgelegt. Diese Positioniereinrichtung ist in Fig. 1b und 1c der Einfachheit halber weggelassen. Die hitzebeständigen Massen 5 und 8 härten dann bei Raumtemperatur aus.

Alsdann werden die beiden gemäß Fig. 1a aneinanderliegenden, entsprechend positionierten Formen 1, 2 in einem Ofen z.B. auf 600°C erwärmt, um das Wachs zu verbrennen, so daß die in Fig. 1a dargestellte Form 1 als Matrize und der Gegenstempel 2 als Patrize gebildet werden, deren Vertiefungen 3.1 und 3.2 den Hohlraum 3 bilden.

Die Form 1 und der Gegenstempel 2 werden dann voneinander getrennt, und es wird, wie in Fig. 1b dargestellt, eine Pressmasse 16 in Form eines Blocks aus einem aromatischen Thermoplast über der Vertiefung 3.1 angeordnet. Der Block 16 wird durch Erwärmen z.B. auf 400°C plastifiziert und sodann der Gegenstempel 2 mit beispielsweise 100 bar gegen die Form 1 gepresst, so daß sich die Vertiefungen 3.1 und 3.2 mit plastifiziertem Thermoplast füllen, wie in Fig. 1c dargestellt. Das Erwärmen kann beispielsweise in einem Ofen erfolgen. Nach dem Abkühlen wird entformt und die gebildete Krone 17 nachbearbeitet, beispielsweise um den Fortsatz 18, Grate und dergleichen zu entfernen.

Der Kanal 4 ist vorgesehen, um Lufteinschlüsse in dem spitzen Endbereich der Vertiefung 3.1 beim Pressen zu verhindern. Das heißt, durch den Kanal 4 wird sichergestellt, daß Luft im spitzen Endbereich der Vertiefung 3.1 durch die plastifizierte Pressmasse 16 in den Kanal 4 verdrängt werden kann.

## Patentansprüche

1. Verfahren zur Herstellung von Zahnersatz (19), der durch Pressen einer erwärmten Pressmasse (16) aus einem aromatischen Thermoplast zwischen einer Form (1) und einem Gegenstempel (2) gebildet wird, **dadurch gekennzeichnet, dass** in der Form (1) und dem Gegenstempel (2) Vertiefungen (3.1 und 3.2) vorgesehen sind, die zusammen einen dem herzustellenden Zahnersatz (17) entsprechenden Hohlraum (3) bilden, wobei die Form (1) und der Gegenstempel (2) durch folgende Schritte hergestellt werden:
- an einem aus einem Abdruck hergestellten Modell wird der Zahnersatz aus einem modellierbaren, rückstandslos verbrennbaren Material modelliert,
- der modellierte Zahnersatz wird mit einem Abschnitt in eine aushärtbare, hitzebeständige Masse (5) in der Form (1) und mit seinem anderen Abschnitt in einer aushärtbaren, hitzebeständigen Masse (8) in dem Gegenstempel (2) eingebettet, und
- die Masse (5, 8) in der Form (1) und im Gegenstempel (2) wird bei einer ersten Temperatur ausgehärtet und nach dem Aushärten auf eine zweite höhere Temperatur erwärmt, bei der der modellierte Zahnersatz verbrennt, um die Vertiefungen (3.1 und 3.2) in der Form (1) und dem Gegenstempel (2) zu bilden.

2. Verfahren nach Anspruch 1, **dadurch gekennzeichnet, daß** an den modellierten Zahnersatz in dem von dem Gegenstempel (2) abgewandten Endbereich in der Form (1) und/oder in dem von der Form (1) abgewandten Endbereich des Gegenstempels (2) wenigstens ein Fortsatz zur Bildung eines Kanals (4) nach dem Verbrennen des modellierbaren Materials vorgesehen ist.

3. Verfahren nach einem der vorstehenden Ansprüche, **dadurch gekennzeichnet, daß** als aromatischer Thermoplast ein Sulfonsäuregruppen haltiger aromatischer Thermoplast oder Polyetheretherketon (PEEK) verwendet wird.

4. Verfahren nach Anspruch 3, **dadurch gekennzeichnet, daß** der sulfonsäuregruppenhaltige Thermoplast Polyethersulfon (PES) oder Polysulfon (PSU) ist.

5. Verfahren nach einem der vorstehenden Ansprüche, **dadurch gekennzeichnet, daß** der aromatische Thermoplast bis zu 60 Vol.-% Füllstoffe enthält.

## Claims

1. A method for producing a denture (19) that is formed by pressing a heated molding material (16) consisting of an aromatic thermoplastic between a mold (1) and a counter die (2), **characterized in that** the mold (1) and the counter die (2) have depressions (3.1 and 3.2) that together form a cavity (3) corresponding to the denture (17) to be produced, the mold (1) and the counter die (2) being produced by the following steps:
- molding the denture from a moldable, residue-free combustible material on a model produced from an impression,
- embedding the molded denture with one portion into a curable, heat-resisting composition (5) in the mold (1) and with its other portion in a curable, heat-resisting composition (8) in the counter die (2), and
- curing the composition (5, 8) in the mold (1) and in the counter die (2) at a first temperature and, after curing, heating it to a second higher temperature at which the molded denture burns to form the depressions (3.1 and 3.2) in the mold (1) and the counter die (2).

2. A method according to claim 1, **characterized in that** at least one extension for forming a channel (4) after the burning of the moldable material is provided on the molded denture in the end area in the mold (1) facing away from the counter die (2) and/or in the end area of the counter die (2) facing away from the mold (1).

3. A method according to either of the above claims, **characterized in that** the aromatic thermoplastic used is a sulfonic acid group containing aromatic thermoplastic or polyetheretherketone (PEEK).

4. A method according to claim 3, **characterized in that** the sulfonic acid group containing thermoplastic is polyethersulfone (PES) or polysulfone (PSU).

5. A method according to any of the above claims, **characterized in that** the aromatic thermoplastic contains up to 60 vol% fillers.

## Revendications

1. Procédé de fabrication de prothèse dentaire (19) qui est formée par moulage par pression d'une matière moulée (16) en une matière thermoplastique aromatique chauffée entre un moule (1) et un contre-poinçon (2), **caractérisé en ce que** dans le moule (1) et dans le contre-poinçon (2) sont prévus des creux (31. et 3.2) qui forment ensemble une cavité (3) correspondant à la prothèse dentaire (17) à fabriquer, le moule (1) et le contre-poinçon (2) étant fabriqués par les étapes suivantes :
- sur un modèle réalisé à partir d'une empreinte, on modèle la prothèse dentaire à partir d'un matériau modelable et combustible sans résidus,
- on noie une portion de la prothèse dentaire modelée dans une masse (5) réfractaire et durcissable dans le moule et son autre portion dans une masse (8) réfractaire et durcissable dans le contre-poinçon (2), et
- on chauffe la masse (5, 8) dans le moule (1) et dans le contre-poinçon (2) à une première température et, après le durcissement, à une deuxième température plus élevée à laquelle la prothèse modelée se consume pour former les creux (3.1 et 3.2) dans le moule (1) et dans le contre-poinçon (2).

2. Procédé selon la revendication 1, **caractérisé en ce que** sur la prothèse dentaire modelée, il est prévu dans la région d'extrémité du moule (1) qui est détournée du contre-poinçon (2), et/ou dans la région d'extrémité du contre-poinçon (2) qui est détournée du moule (1), au moins un prolongement pour former un canal (4) après la combustion du matériau modelable.

3. Procédé selon l'une des revendications précédentes, **caractérisé en ce qu'**on utilise en tant que matière thermoplastique aromatique une matière thermoplastique aromatique contenant des groupes d'acide sulfonique ou du polyétheréthercétone (PEEK).

4. Procédé selon la revendication 3, **caractérisé en ce que** la matière thermoplastique contenant des groupes d'acide sulfonique est du polyéthersulfone (PES) ou du polysulfone (PSU).

5. Procédé selon l'une des revendications précédentes, **caractérisé en ce que** la matière thermoplastique aromatique contient jusqu'à 60 % de matière de charge.
